# EUROPEAN PATENT SPECIFICATION

(11) **EP 1 205 922 B1**
(45) Date of publication and mention of the grant of the patent: **09.05.2007**
(21) Application number: 00310111.0
(22) Date of filing: 14.11.2000
(51) Int. Cl.: G11B 7/12, G11B 33/14, G11B 23/00

(54) **Lens cleaner disc for use in disc playing device**
Linsenreinigungsplatte zur Verwendung in einem Lesegerät für Platten
Disque de nettoyage de la lentille à utiliser dans un lecteur de disques

(43) Date of publication of application: 15.05.2002
(73) Proprietor: Kobayashi, Asao, Yokohama-shi, Kanagawa (JP)
(72) Inventor: Kobayashi, Asao, Yokohama-shi, Kanagawa (JP)
(74) Representative: Mounteney, Simon James

(56) References cited:
- GB-A- 2 278 710
- US-A- 5 499 228
- PATENT ABSTRACTS OF JAPAN vol. 018, no. 564 (P-1819), 27 October 1994 (1994-10-27) -& JP 06 203402 A (RICOH CO LTD), 22 July 1994 (1994-07-22)

## Description

### BACKGROUND OF THE INVENTION

### 1. Field of the Invention

The present invention relates to a lens cleaner for use in a disc playing device. In particular, this invention relates to an improved lens cleaner capable of effectively removing dust from a lens of an optical pickup of a disc playing device by exposing the lens to an air flow passing one or more through holes formed on a cleaning disc.

### 2. Description of the Related Art

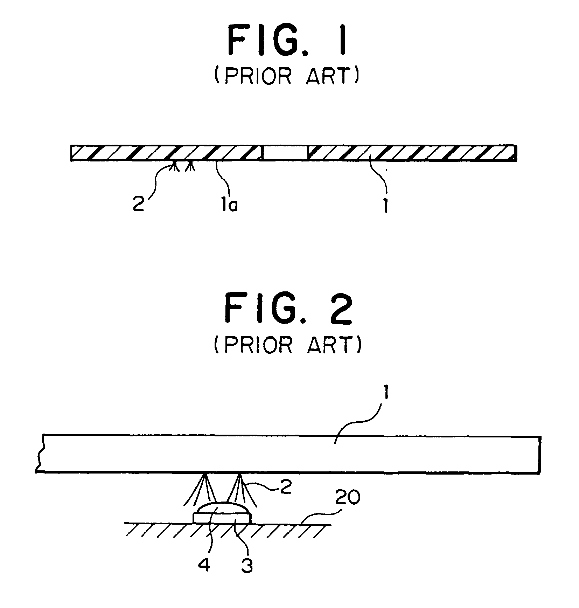

As a conventional lens cleaner for use in a disc playing device, there has been known a configuration shown in Fig. 1 and Fig. 2. In Fig. 1, reference numeral 1 represents a cleaning disc which has been formed into a shape similar to any one of commercially available optical discs such as a CD, an MD, a CD-R, and a DVD. If the cleaning disc has a shape identical with a CD, it will have a thickness of 1.2 mm + 0.3, - 0.1. On the lens side 1a of the cleaning disc 1 there are provided several bundles of flocks 2. These bundles of flocks 2 are so formed that they can get in touch with a lens 4 of an optical pickup 3.

In this way, if such a cleaning disc 1 is attached, in place of a CD, to a predetermined position within a disc playing device (not shown), and is rotated in a manner as shown in Fig. 2, it is possible to clean the lens 4 by means of the flocks 2.

However, since the conventional lens cleaner for use in a disc playing device has a structure as described in the above, it has been found to have the following problem.

That is, since the flocks (they can also be formed by a rubber-like material and be shaped into post-like projections) are protruding outwardly from one surface of the cleaning disc and extending for several millimeters, the cleaning disc is usually manufactured without having any industrial standards. As a result, the cleaning disc is either impossible to be inserted into a predetermined position within a disc playing device, or would be rebounded outwardly after it has been inserted into the predetermined position within the device. Alternatively, a cleaning disc forcefully inserted into a predetermined position within a disc playing device would become stuck therein and is difficult to be taken out.

Furthermore, in the case where the flocks have become polluted, such polluted flocks will in turn pollute the lens of an optical pickup and even bring about a possibility that the lens can be wounded. In addition, if the flocks are used in a wetted manner, there is also a possibility that a user will cause the flocks to unnecessarily absorb too much of a liquid. As a result, the lens will be made partially cloudy or will be contaminated with dust. Moreover, if the above-described flocks are something protruding outwardly, they are likely to become deteriorated so that they can not be used for a time period as long as expected.

US 5499228 discloses a lens cleaning disk comprising an informations recording area and an area containing no information, in which a number of brushes are located.

JP 06203402 discloses a lens cleaning disk comprising a number of holes arranged to direct air at a lens when the disk is rotated.

### SUMMARY OF THE INVENTION

The present invention has been accomplished in order to solve the above problem, and it is an object of the invention to provide an improved lens cleaner capable of effectively removing dust from a lens of an optical pickup of a disc playing device by exposing the lens to an air flow passing through one or more through holes formed on a cleaning disc.

According to the present invention, there is provided a lens cleaner as set out in Claim 1.

Preferred features of the invention are set out in Claims 2 to 6.

### BRIEF DESCRIPTION OF THE DRAWINGS

Fig. 1 is a cross sectional view schematically showing a conventional cleaning disc.
Fig. 2 is an explanatory view schematically showing a condition when the conventional cleaning disc is in use.
Fig. 3 is a plan view schematically showing a cleaning disc formed according to the present invention.
Fig. 4 is an explanatory view schematically showing how the lens of an optical pickup can be cleaned by virtue of an air flow passing the through holes formed on the cleaning disc of Fig. 3.
Fig. 5 is a sectional view showing another shape of a through hole formed on the cleaning disc of Fig. 3.
Fig. 6 is a sectional view showing another shape of a through hole formed on the cleaning disc of Fig. 3.
Fig. 7 is a sectional view showing another shape of a through hole formed on the cleaning disc of Fig. 3.

### DESCRIPTION OF THE PREFERRED EMBODIMENTS

A preferred embodiment of a lens cleaner for use in a disc playing device, which is formed according to the present invention, will be described in the following with reference to the accompany drawings. However, in the accompanying drawings, elements or members identical with or similar to those used in the above-described prior art will be represented by the same reference numerals for explanation.

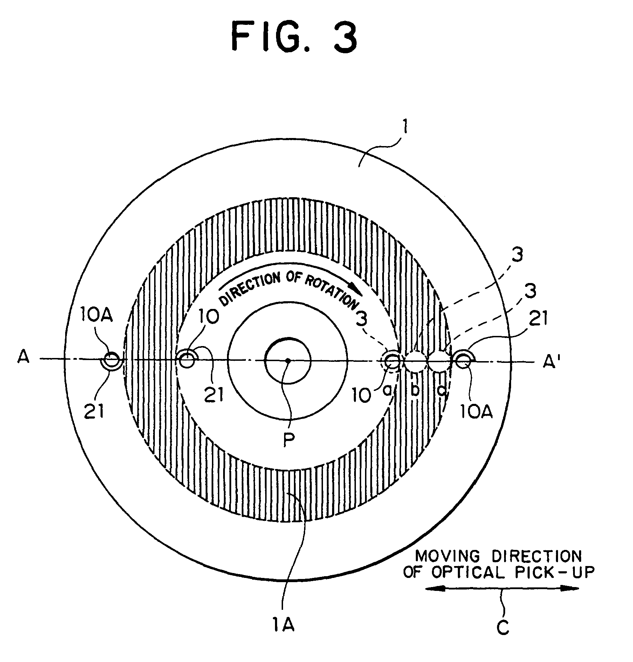

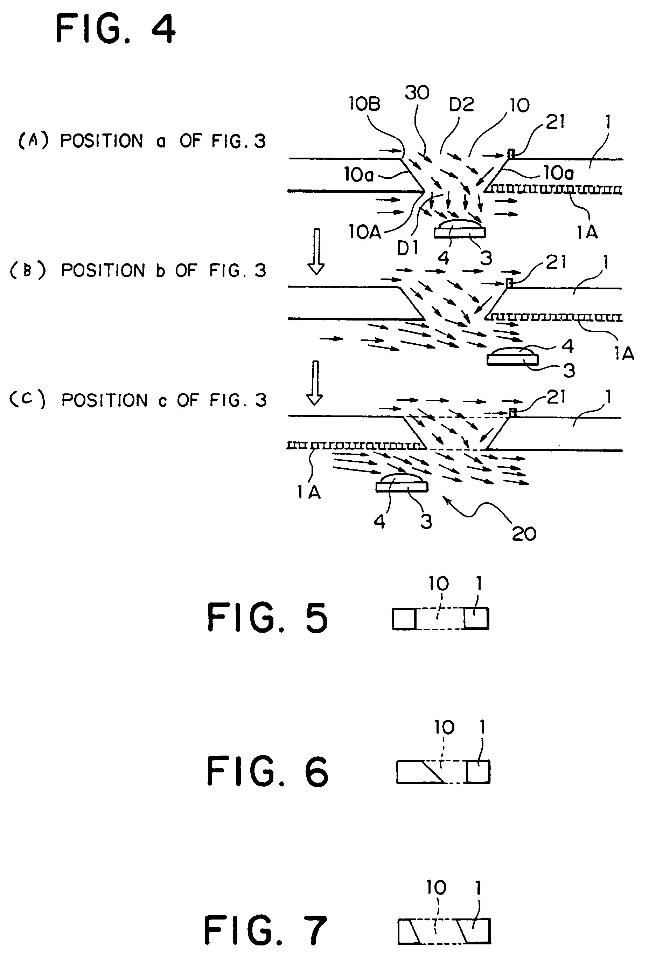

Referring to Fig. 3, reference numeral 1 is used to represent a cleaning disc which has been formed into a shape identical with any one of commercially available discs such as a CD, an MD, a CD-R, and a DVD. The cleaning disc 1 is so formed that it can be freely detachably inserted into a predetermined position within a commercially available disc playing device (not shown) such as a music disc player, a video disc player and a personal computer. Meanwhile, the cleaning disc 1 may be so formed that it is at least reproducible or readable, and at the same time easily writable and recordable.

On one surface of the above cleaning disc 1 there are formed a plurality of information recording tracks 1A for recording music data or image data.

As shown in the drawing, one or more through holes 10 are formed on the cleaning disc 1. Specifically, these through holes are located adjacent to the circumferential edge of the cleaning disc but not in the areas containing the information recording tracks. On the other hand, if there are only two through holes 10 formed on the cleaning disc, they are required to be arranged symmetrically left and right, with the rotating center of the disc therebetween, thereby rendering the two through holes to be concentrically arranged at two different positions, forming an angle of 180 degrees when viewed from the rotating center. Each through hole 10 is formed in a manner as shown in Fig. 4. That is, the internal wall of each through hole 10 is formed into a tapered surface 10a. An optical pickup 3 having a lens 4 is provided in a disc playing device 20 in a manner such that the optical pickup is located in a position facing the through hole 10 (in the drawing, it is located under the through hole). Specifically, the through holes 10 are positioned along the same identical radial line on the disc 1.

In particular, each through hole 10 has a first opening 10A located on one side of the disc close to the lens 4 and has a second opening 10B located on the opposite side of the disc. The first opening 10A has a diameter D1, and the second opening 10B has a diameter D2 which is larger than the diameter D1 of the first opening. In this way, each through hole 10 becomes smaller towards the lens 4, thereby forming a configuration like a funnel. In the embodiment shown in Fig. 4, it has been shown that the optical pickup 3 is disposed under the cleaning disc 1. However, in addition to a configuration shown in the drawing where the cleaning disc 1 is horizontally inserted into the disc playing device, it is also possible to form another configuration where the cleaning disc 1 is vertically inserted into a disc playing device.

Along the edge of the second opening 10B of each through hole 10 there is formed a semi-circular or fence-like projection 21 consisting (for example) of a half-ring like wall, having a height which is low enough so as not to hamper the insertion of the disc into the disc playing device and not to hamper the detachment of the disc therefrom, either. Specifically, the projection 21 is formed in the axial direction of the through hole 10.

The operation of the cleaning disc may be described in the following. At first, in place of one of various commonly used optical discs, the cleaning disc 1 is inserted into a disc playing device 20 such as a music disc player, a video disc player and a personal computer. Then, the cleaning disc 1 is caused to rotate at a high speed, thereby obtaining an effect shown in Figs. 4A to 4C. Namely, an air flow 30 is generated and caused to directly flow into each through hole 10. According to the invention, the generated air flow at first gets in contact with the projection 21 and then flows into each through hole 10. In this way, the air flow 30 gets in contact with the lens 4 of the optical pickup 3, so as to blow away and thus remove dust or the like from the lens 4. At this time, since the cleaning disc 1 is rotated at a high speed, as shown in Figs. 4A to 4C, the optical pickup 3 will be caused to move in a direction shown by arrows in the drawings, and will also move along the information recording tracks 1A. In this way, the air flow 30 in contact with the lens 4 may be continuously generated, while at the same time the information recording tracks 1A can be reproduced.

However, according to the result of experiment, it was found that a satisfactory cleaning effect can be obtained even if the projection 21 is not formed, but according to the invention the cleaning effect will be more satisfactory because the projection 21 has been formed.

Furthermore, each through hole 10 may also be formed into a shape shown in any one of Figs. 5 to Fig. 7, thereby obtaining a similar effect. In addition, a cleaning effect can also be obtained if the through hole is formed into a shape having a non-circular cross section. However, as to the positions for the through holes 10 to be formed on the cleaning disc 1, these positions may be different from those described in the above. Namely, it is possible that a plurality of such through holes may be disposed not along the same identical radial line on the disc, but on different radial lines.

In this way, since the lens cleaner for use in a disc playing device has been constructed in the manner described in the above, it is allowed to obtain at least the following effects.

That is, since the cleaning disc having the through holes may be inserted into a disc playing device in the same manner when an optical disc is inserted into the device, the lens of the optical pickup may be cleaned by virtue of an air flow generated and passing through the through holes. Thus, the cleaning disc can be inserted into and removed from a disc playing device without any difficulty, thereby solving the above-described problem existing in the above-described prior art.

Furthermore, since the above-described conventional cleaning disc has several bundles of flocks which are easy to get dirty, the lens of an optical pickup is also likely to get dirty because of the dirty flocks. Different from the conventional cleaning disc, the cleaning disc formed according to the present invention enables the lens of an optical pickup to be cleaned by virtue of an air flow, thus exactly avoiding the above-described problem associated with the conventional cleaning disc.

In addition, the above-described conventional cleaning disc has only a relatively short useful life since the flocks will wear away. Different from the conventional cleaning disc, the cleaning disc formed according to the present invention enables the lens of an optical pickup to be cleaned using an air flow rather then the flocks, thus allowing the cleaning disc to be used for a considerably extended time period, therefore greatly reducing an amount of waste lens cleaners thrown away as rubbish, thereby rendering the present invention useful for improving surrounding environment.

Furthermore, since in the present invention the through holes are formed on the cleaning disc in areas not containing the information recording tracks, even if the cleaning disc is inserted into the disc displaying device for the purpose of cleaning the lens of an optical pickup, it is possible to carry out two operations at the same time, with one being the cleaning of the lens and the other being the reproducing of music or image informations recorded on the cleaning disc, all by virtue of the predetermined movement of the optical pickup in the disc playing device.

## Claims

1. A lens cleaner (1) for use in a disc playing device (20), which lens cleaner (1) is for cleaning a lens (4) of an optical pickup (3) of a disc playing device (20) which is capable of reading out or reproducing information data from an optical disc by means of the optical pickup (3) having the lens (4), said lens cleaner (1) comprising:
a cleaning disc having a shape similar to the optical disc;
a plurality of information recording tracks (1A) formed on one surface of the cleaning disc;
**characterized by** comprising:
one or more through holes (10) formed on the cleaning disc and located in areas not containing the information recording tracks (1A);
wherein an air flow is generated by said one or more through holes (10) when the cleaning disc is rotated, and is sent to the lens (4) of the optical pickup (3), the lens cleaner (1) further comprising one or more projections (21) arranged to project from the cleaning disc, the or each projection (21) being adjacent a said through hole (10) and being arranged to direct air into the said through hole (10) when the cleaning disc is rotated.

2. A lens cleaner (1) according to Claim 1, wherein when a plurality of through holes (10) is formed on the cleaning disc, the through holes (10) are disposed on both the inside and outside of the information recording tracks (1A).

3. A lens cleaner according to Claim 1 or 2, wherein when a plurality of through holes (10) is formed on the cleaning disc, the through holes (10) are arranged on the same identical radial line of the cleaning disc.

4. A lens cleaner according to Claim 1 or 2, wherein when a plurality of through holes (10) is formed on the cleaning disc, the through holes are arranged on different radial lines of the cleaning disc.

5. A lens cleaner according to any one of Claims 1 to 4, wherein when a plurality of through holes (10) is formed on the cleaning disc, these through holes (10) are arranged symmetrically on the left and right sides of the rotating centre of the disc.

6. A lens cleaner according to any one of Claims 1 to 5, wherein the one or more through holes (10) are so formed that their internal walls have tapered surfaces.

## Patentansprüche

1. Linsenreiniger (1) für die Verwendung in einer Diskabspielvorrichtung (20), wobei der Linsenreiniger (1) zur Reinigung einer Linse (4) eines optischen Abnehmers (3) einer Diskabspielvorrichtung (20) vorgesehen ist, die im Stande ist, durch den optischen Abnehmer (3), welcher die Linse (4) aufweist, Informationen von einer optischen Disk auszulesen oder zu reproduzieren, wobei der Linsenreiniger (1) umfasst;
eine Reinigungsdisk, die eine der optischen Disk ähnliche Form aufweist;
eine Vielzahl von Informationsaufnahmespuren (1A), die auf einer Oberfläche der Reinigungsdisk ausgebildet sind;
**dadurch gekennzeichnet, dass** er umfasst:
ein oder mehrere Durchgangslöcher (10), die auf der Reinigungsdisk ausgebildet sind und in Bereichen angeordnet sind, die keine Informationsaufnahmespuren (1A) enthalten;
bei dem ein Luftstrom durch das oder die mehreren Durchgangslöcher (10) erzeugt wird, wenn die Reinigungsdisk gedreht wird, und wobei der Luftstrom zur Linse (4) des optischen Abnehmers (3) geschickt wird, wobei der Linsenreiniger (1) weiterhin einen oder mehrere Vorsprünge (21) umfasst, die so angeordnet sind, dass sie von der Reinigungsdisk abstehen, wobei der oder jeder der Vorsprünge (21) neben einem Durchgangsloch (10) so angeordnet ist, dass die Luft in das Durchgangsloch (10) geleitet wird, wenn die Reinigungsdisk gedreht wird.

2. Linsenreiniger nach Anspruch 1, bei dem die Durchgangslöcher (10) sowohl innerhalb, als auch außerhalb der Informationsaufnahmespuren angeordnet sind, wenn eine Vielzahl von Durchgangslöchern auf der Reinigungsdisk ausgebildet ist.

3. Linsenreiniger nach Anspruch 1 oder 2, bei dem die Durchgangslöcher (10) auf derselben identischen radialen Linie angeordnet sind, wenn eine Vielzahl von Durchgangslöchern auf der Reinigungsdisk ausgebildet ist.

4. Linsenreiniger nach Anspruch 1 oder 2, bei dem die Durchgangslöcher auf verschiedenen radialen Linien angeordnet sind, wenn eine Vielzahl von Durchgangslöchern auf der Reinigungsdisk ausgebildet ist.

5. Linsenreiniger nach einem der Ansprüche 1 bis 4, bei dem die Durchgangslöcher (10) symmetrisch auf der linken und rechten Seite vom Rotationszentrum der Disk angeordnet sind, wenn eine Vielzahl von Durchgangslöchern auf der Reinigungsdisk ausgebildet ist.

6. Linsenreiniger nach einem der Ansprüche 1 bis 5, bei dem das eine oder die mehreren Durchgangslöcher (10) so ausgebildet sind, dass deren innere Wände konische Oberflächen aufweisen.

## Revendications

1. Dispositif de nettoyage de lentille (1) destiné à être utilisé dans un lecteur de disques (20), le dispositif de nettoyage de lentille (1) servant à nettoyer une lentille (4) d'un capteur optique (3) d'un lecteur de disques (20) capable de lire ou de reproduire des données d'information d'un disque optique par l'intermédiaire du capteur optique (3) comportant la lentille (4), ledit dispositif de nettoyage de lentille (1) comprenant:
un disque de nettoyage ayant une forme similaire à celle du disque optique;
plusieurs pistes d'enregistrement d'informations (1A) formées sur une surface du disque de nettoyage;
**caractérisé en ce qu'**il comprend:
un ou plusieurs trous de passage (10) formés sur le disque de nettoyage et agencés dans des zones ne contenant pas les pistes d'enregistrement des informations (1A);
un écoulement d'air étant produit par lesdits un ou plusieurs trous de passage (10) lors de la rotation du disque de nettoyage, et transmis vers la lentille (4) du capteur optique (3), le dispositif de nettoyage de la lentille (1) comprenant en outre une ou plusieurs saillies (21) débordant du disque de nettoyage, la ou chaque saillie (21) étant adjacente à un dit trou de passage (10) et étant arrangé pour à diriger l'air dans ledit trou de passage (10) lors de la rotation du disque de nettoyage.

2. Dispositif de nettoyage de lentille (1) selon la revendication 1, dans lequel, lors de la formation de plusieurs trous de passage (10) dans le disque de nettoyage, les trous de passage (10) sont agencés sur l'intérieur et sur l'extérieur des pistes d'enregistrement des informations (1A).

3. Dispositif de nettoyage de lentille selon les revendications 1 ou 2, dans lequel, lors de la formation de plusieurs trous de passage (10) dans le disque de nettoyage, les trous de passage (10) sont agencés sur la même ligne radiale identique du disque de nettoyage.

4. Dispositif de nettoyage de lentille selon les revendications 1 ou 2, dans lequel, lors de la formation de plusieurs trous de passage (10) dans le disque de nettoyage, les trous de passage (10) sont agencés sur différentes lignes radiales du disque de nettoyage.

5. Dispositif de nettoyage de lentille selon l'une quelconque des revendications 1 à 4, dans lequel, lors de la formation de plusieurs trous de passage (10) dans le disque de nettoyage, ces trous de passage (10) sont agencés de manière symétrique sur les côtés de droite et de gauche du centre de rotation du disque.

6. Dispositif de nettoyage de lentille selon l'une quelconque des revendications 1 à 5, dans lequel un ou plusieurs trous de passage (10) sont formés de sorte que leurs parois internes comportent des surfaces effilées.
